# EUROPEAN PATENT SPECIFICATION

(11) **EP 2 589 772 B1**
(45) Date of publication and mention of the grant of the patent: **26.11.2014**
(21) Application number: 12788842.8
(22) Date of filing: 09.05.2012
(51) Int. Cl.: F02B 67/06, F02B 61/02, F16H 7/08, F16H 7/18

(54) **ENGINE AND SADDLE-TYPE VEHICLE**
MOTOR UND SATTELFAHRZEUG
MOTEUR, ET VÉHICULE À SELLE

(30) Priority: 20.05.2011 JP 2011114019
(43) Date of publication of application: 08.05.2013
(73) Proprietor: Yamaha Hatsudoki Kabushiki Kaisha, Iwata-shi, Shizuoka 438-8501 (JP)
(72) Inventor: INOMORI Toshinori, Iwata-shi Shizuoka 438-8501 (JP); NAKAJIMA Akitoshi, Iwata-shi Shizuoka 4388501 (JP)
(74) Representative: Grünecker, Kinkeldey, Stockmair & Schwanhäusser
(86) International application number: PCT/JP2012/061821
(87) International publication number: WO 2012/160968

(56) References cited:
- JP-A- 2009 228 790
- JP-A- 2011 064 259

## Description

### Technical Field

The present invention relates to an engine and a saddle riding type vehicle. The invention more specifically relates to a structure of a tensioner that provides a cam chain with tension.

### Background Art

A motorcycle is known as a kind of saddle riding type vehicle. An **engine as described within the preamble of claim 1 is known from** JP-A 2009-228673. In the engine disclosed by JP-A 2009-228673, motive power from a crankshaft is transmitted to a camshaft through a cam chain.

A cam chain is provided in a chain chamber. The chain chamber is formed over a crankcase, a cylinder body, and a cylinder head. The cam chain is provided with tension so that it is not loosen. The engine disclosed by JP-A 2009-228673 includes a tensioner used to press a chain guide against a cam chain. The tensioner provides tension to the cam chain.

When the cam chain is attached to the engine, the following operation is carried out. While a cylinder body and a cylinder head are not attached to the crankcase, the cam chain is wrapped around a sprocket attached to a crankshaft. When the cylinder body is attached to the crankcase, a cam chain guide is attached to the cylinder body. The cylinder head is attached to the cylinder body and the cam chain is wrapped around a sprocket to be attached to the camshaft. The sprocket on the side of camshaft is fixed to the camshaft. Finally, the tensioner is attached to the cylinder head and the cam chain is provided with tension.

### Disclosure of the Invention

In the engine disclosed by JP-A 2009-228673, the tensioner is necessary in addition to the cam chain guide, which increases the number of parts. In order to reduce the number of parts, a blade tensioner that may function both as a tensioner and a cam chain guide could be used. In this case, the blade tensioner is attached in timing in which the cam chain guide is attached. In this way, the cam chain is provided with tension by the blade tensioner already during the operation of attaching the blade tensioner. In this state, when the cam chain is wrapped around the sprocket on the camshaft side, the tension acts on the cam chain, which makes it difficult to wrap the cam chain around the sprocket on the camshaft side.

Some cylinder bodies have side surfaces that can be opened/closed. When a side surface of a cylinder body opens, it would be possible to open the side surface of the cylinder body and the cylinder head and support the blade tensioner so that no tension is provided to the cam chain during the operation of attaching the cam chain. However, engines for saddle riding type vehicles generally employ an arrangement that does not allow a side surface of a cylinder body to open. Such an arrangement makes it difficult to attach the cam chain as described above.

It is an object of the present invention to provide a structure that provides a cam chain with tension using a blade tensioner and allows the cam chain to be readily attached to an engine having a cylinder body with a non-opening side surface.

An engine according to the present invention has a chain chamber and includes a crankshaft, a camshaft, a first sprocket attached to said crankshaft, a second sprocket attached to said camshaft, a crankcase that stores said first sprocket, a cylinder body attached to said crankcase, a cylinder head attached to said cylinder body to store said second sprocket, a chain wrapped around said first and second sprockets, and a tension providing member that provides said chain with tension, said crankcase, said cylinder body, and said cylinder head form said chain chamber that stores said chain and said tension providing member, said cylinder body includes a tubular part that forms a part of said chain chamber, said tension providing member includes a plate spring member curved in an arch shape when viewed in an axial direction of said crankshaft and a contact member that supports said spring plate member and contacts said chain in said chain chamber, said crankcase includes a support shaft inserted into a support hole formed at said tension providing member to support said tension providing member in a swingable manner, and a provisional support shaft positioned on an opposite side to said second sprocket with respect to a straight line that connects a center of said support shaft and a center of said first sprocket when viewed in the axial direction of said crankshaft and contacting a provisional support part formed at said tension providing member to support said tension providing member, said chain chamber includes a support surface that contacts one part of said tension providing member to support said one part in a slidable manner while said tension providing member is supported by said support shaft, and a provisional support surface that contacts said one part of said tension providing member to support said one part in a slidable manner while said tension providing member is supported by said provisional support shaft, and said provisional support shaft is positioned more on the side of said provisional support surface side than a part of said chain wrapped around said first sprocket when viewed in the axial direction of said crankshaft.

The engine according to the present invention allows a chain to be easily attached.

### Brief Description of Drawings

Fig. 1 is a left side view of an overall structure of a motorcycle according to a first embodiment of the present invention.
Fig. 2 is a top sectional view of a front part of a power unit in the motorcycle shown in Fig. 1.
Fig. 3 is a top sectional view of a rear part of the power unit in the motorcycle shown in Fig. 1.
Fig. 4 is a partly sectional view of a chain chamber when viewed from the left.
Fig. 5 is a top sectional view showing a part of Fig. 2 being enlarged.
Fig. 6 is a top sectional view of a structure of how a tensioner is attached.
Fig. 7 is a partly sectional view showing a step in a method of assembling an engine.
Fig. 8 is a top sectional view showing a state of how the tensioner in Fig. 7 is supported.
Fig. 9 is a partly sectional view showing a step in the method of assembling an engine subsequent to the step shown in Fig. 7.
Fig. 10 is a partly sectional view of a chain chamber according to a second embodiment of the present invention when viewed from the left showing a tensioner in a provisionally fixed state.
Fig. 11 is a top sectional view of a structure of how a tensioner is attached according to a third embodiment of the present invention showing the tensioner in a provisionally fixed state.

### Mode for Carrying Out the Invention

### Embodiments

Now, referring to the accompanying drawing, a motorcycle 10 according to an embodiment of the present invention will be described. According to the embodiment, a scooter type motorcycle will be described as an example of the motorcycle 10. In the drawings, the same or corresponding portions are designated by the same reference characters and their description will not be repeated.

### Overall Structure

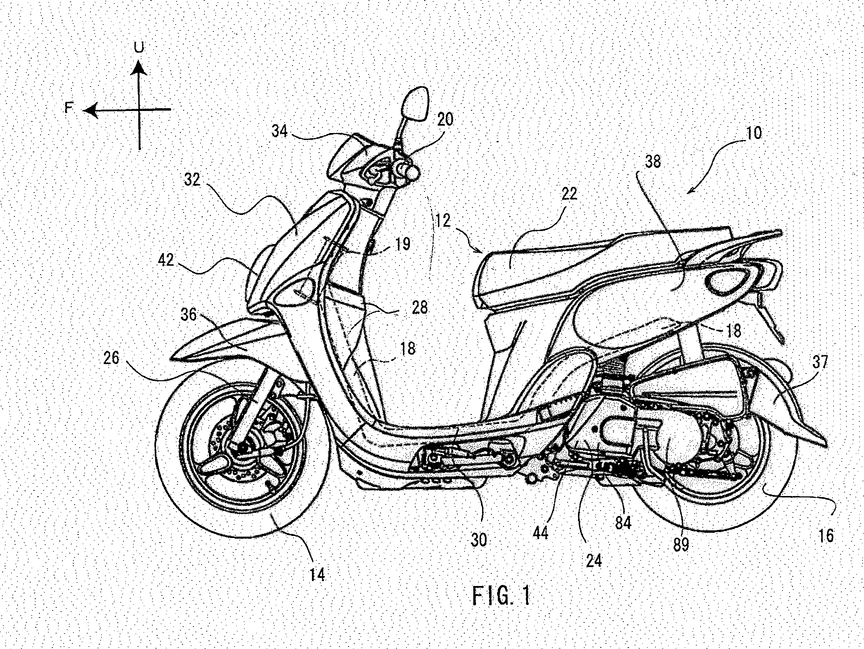

Fig. 1 is a left side view of the motorcycle 10 according to an embodiment of the present invention. In the following description, the front, back, left, and right refer to these directions as viewed from a rider seated on the seat 22 of the motorcycle 10. In the drawings, the arrow F indicates the forward direction of the motorcycle 10 and the arrow U indicates the upward direction of the motorcycle 10.

The motorcycle 10 includes a vehicle main body 12, a front wheel 14 provided at a front part of the motorcycle 10, and a rear wheel 16 provided at a rear part of the motorcycle 10.

The vehicle main body 12 mainly includes a vehicle body frame 18, a handle 20, the seat 22, and a power unit 24.

The vehicle body frame 18 supports the power unit 24, the seat 22, and the like. The vehicle body frame 18 is depicted by a broken line in Fig. 1. The vehicle body frame 18 has a head pipe 19. The head pipe 19 has a steering shaft inserted therein in a rotatable manner. The handle 20 is attached at an upper end of the steering shaft. A front fork 26 is attached at both ends of the steering shaft. The front wheel 14 is attached at a lower end of the front fork 26 in a rotatable manner. The vehicle body frame 18 is made of a metal having high rigidity such as steel.

The vehicle body frame 18 is covered with a vehicle body cover 28. The vehicle body cover 28 is made of resin. The vehicle body cover 28 has a footboard 30, a front cover 32, a handle cover 34, a front fender 36, a rear fender 37, and a side cover 38.

The footboard 30 is provided under the seat 22. The footboard 30 extends in the front-back direction.

The front cover 32 is provided in front of the seat 22. The front cover 32 is provided to cover the head pipe 19. The front cover 32 is provided with a head light 42.

The handle cover 34 covers a part of the handle 20. The handle cover 34 is provided above the front cover 32. The handle cover 34 is provided with a panel used to indicate various measuring instrument such as a speed meter, not shown.

The front fender 36 is provided above the front wheel 14. The front fender 36 is provided under the front cover 32. The front fender 36 is provided to protrude ahead of the front cover 32.

The side cover 38 is provided under the seat 22. The side cover 38 is positioned above the rear wheel 16. The rear fender 37 is provided above the rear wheel 16. The side cover 38 extends backward from under the seat 22.

The handle 20 is provided ahead of a rider seated on the seat 22. The handle 20 extends in the left-right direction. Grips that can be held by a rider are provided at the ends of the handle 20.

The seat 22 is provided above the power unit 24. There is a storage space capable of storing a helmet or the like under the seat 22.

The power unit 24 is provided in the vicinity of the rear wheel 16. The power unit 24 is supported swingably in the up-down direction with respect to the vehicle body frame 18. The engine 44, a crankcase 84 and a mission case 89 included in the power unit 24 are exposed from the vehicle body cover 28. The power unit 24 will be described in detail.

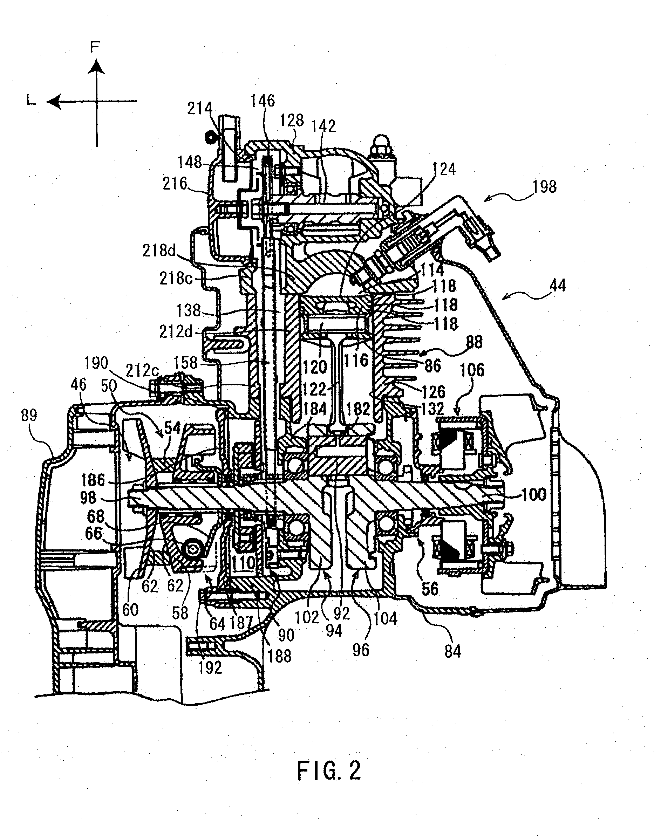

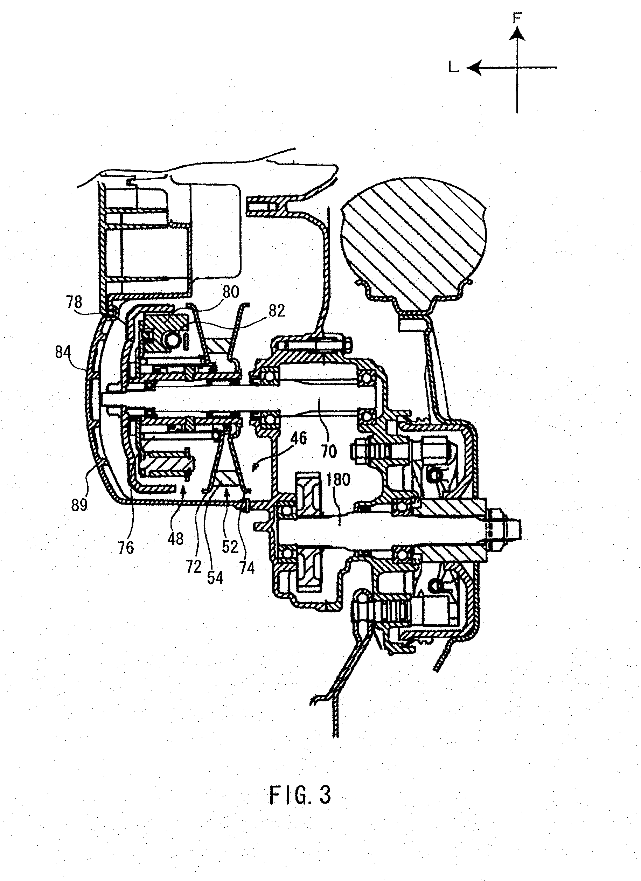

Referring to Figs. 2 and 3, the power unit 24 will be described. Fig. 2 is a top sectional view showing inside the engine 44 and the crankcase 84 in the power unit 24. Fig. 3 is a top sectional view of a structure of a transmission 46 in the power unit 24. Fig. 3 shows a rear structure of Fig 2. In Figs. 2 and 3, the arrow F indicates the forward direction of the vehicle and the arrow L indicates the leftward direction of the vehicle.

The power unit 24 is a swing arm type power unit. The power unit 24 mainly includes the engine 44 (Fig. 2), the transmission 46 (Figs. 2 and 3) provided on the left side of the engine 44, and a centrifugal clutch 48 (Fig. 3) provided on the left side of the transmission 46.

The transmission 46 is a continuously variable transmission using a V belt 54. The transmission 46 has a driving pulley 50, a driven pulley 52, and the V belt 54.

As shown in Fig. 2, the driving pulley 50 is attached at a left end of the crankshaft 56 provided in the engine 44. The driving pulley 50 has a first driving pulley 58 and a second driving pulley 60. The first driving pulley 58 is provided opposed to the second driving pulley 60. The second driving pulley 60 is provided on the left side of the first driving pulley 58. The first and second driving pulleys 58 and 60 have inclination surfaces 62 that gradually part from each other in the outer circumferential direction. The driving pulley 50 is provided with an interval control mechanism 64 used to control the interval between the first and second driving pulleys 58 and 60.

The interval control mechanism 64 has a plurality of weight rollers 66 and a disk member 68 provided on the right side of the first driving pulley 58. The disk member 68 is made of a material having high rigidity. As the rotation speed of the crankshaft 56 increases and the weight rollers 66 move to the outer circumferential side, the first driving pulley 58 is moved by the weight rollers 66 to the side of the second driving pulley 60.

Referring to Fig. 3, the driven pulley 52 will be described. Note that Fig. 3 shows the centrifugal clutch 48 and the transmission 46.

The driven pulley 52 is provided with motive power transmitted from the driving pulley 50 to rotate. The driven pulley 52 is attached to a first output shaft 70 arranged parallel to the crankshaft 56. The driven pulley 52 has a first driven pulley 72 and a second driven pulley 74 provided on the right side of the first driven pulley 72. Force is applied in the rightward direction in Fig. 3 from a spring 76 supported at a plate of the centrifugal clutch 48 so that the first driven pulley 72 moves closer to the second driven pulley 74.

The V belt 54 transmits the motive power of the driving pulley 50 to the driven pulley 52. The V belt 54 is provided to extend over the driving pulley 50 and the driven pulley 52. More specifically, the V belt 54 is held between the first driving pulley 58 and the second driving pulley 60 and between the first driven pulley 72 and the second driven pulley 74.

The centrifugal clutch 48 is connected to the left side of the driven pulley 52 of the transmission 46. The centrifugal clutch 48 is provided at one end of the first output shaft 70. The centrifugal clutch 48 mainly has a clutch housing 78, a clutch shoe 80, and a clutch spring 82. As the rotating speed of the driving pulley 50 increases, the rotation speed of the clutch shoe 80 increases. The clutch shoe 80 is pressed against the clutch housing 78 due to centrifugal force, and the rotation force of the clutch shoe 80 is transmitted to the clutch housing 78. The motive power transmitted to the clutch housing 78 is transmitted to the first output shaft 70 connected to the clutch housing 78.

A second output shaft 180 connected with the rear wheel 16 is provided behind the first output shaft 70. The first output shaft 70 and the second output shaft 180 can be provided with motive power through a gear that is not shown.

### Engine

Now, mainly referring to Fig. 2, the engine 44 will be described in detail.

The engine 44 is a device that generates motive power for the motorcycle 10. The engine 44 is an air-cooling type engine. The engine 44 mainly includes a crankshaft 56, a crankcase 84, a cylinder 88, a piston 86, and a motive power transmission mechanism 90. The piston 86 is provided in front of the crankshaft 56. The motive power transmission mechanism 90 is provided on the left side of the piston 86.

The crankshaft 56 is provided with motive power transmitted from the piston 86 and rotates. The crankshaft 56 mainly has a crank pin 92, a first crank web 94, a second crank web 96, a first crankshaft 98, and a second crankshaft 100.

The crank pin 92 connects the crankshaft 56 and a connecting rod 122 of the piston 86.

The first crank web 94 supports the crank pin 92. The first crank web 94 is provided with a weight 102 used to reduce inertial force generated by the vibration of the piston 86 and the connecting rod 122. The first crank web 94 is a flat plate type member.

The second crank web 96 supports the crank pin 92. The second crank web 96 is provided to oppose the first crank web 94. The second crank web 96 is provided with a weight 104 used to reduce inertial force generated by the vibration of the piston 86 and the connecting rod 122. The second crank web 96 is a flat plate type member.

The first crankshaft 98 is connected to the first crank web 94. The first crankshaft 98 extends in an approximately orthogonal direction from the first crank web 94. The driving pulley 50 of the transmission 46 is provided at a tip end of the first crankshaft 98.

The second crankshaft 100 is connected to the second crank web 96. The second crankshaft 100 extends in an approximately orthogonal direction from the second crank web 96. A generator 106 is provided at a tip end of the second crankshaft 100. The generator 106 generates electric power.

The crankcase 84 supports the crankshaft 56 through a bearing. The mission case 89 is provided behind the crankcase 84. The transmission 46 and the like are stored in the mission case 89.

The cylinder 88 guides the liner reciprocating movement of the piston 86. The cylinder 88 has a cylinder body 126 and a cylinder head 128.

The cylinder body 126 is provided with a cylinder bore 132 having a circular cross section. The piston 86 is provided at the cylinder bore 132 of the cylinder body 126. The advancing direction of the piston 86 is guided by the cylinder bore 132. The cylinder body 126 is attached to the crankcase 84.

The cylinder head 128 is attached to the cylinder body 126. More specifically, the cylinder head 128 is provided to oppose the crankcase 84 with the cylinder body 126 therebetween. The cylinder head 128 is provided with a wall surface that forms a combustion chamber 114 continuous with the cylinder bore 132 of the cylinder body 126. The combustion chamber 114 is provided with a plurality of holes (not shown) connected to the outside of the combustion chamber 114. A valve (not shown) is provided at each of the holes and the valve is driven when air is taken/discharged into/from the combustion chamber 114. The combustion chamber 114 is provided with a fuel supply device (not shown) used to supply fuel to the combustion chamber 114. The cylinder head 128 is provided with an ignition device 198 used to ignite an air-fuel mixture in the combustion chamber 114. The cylinder head 128 is provided with the camshaft 142 used to drive the plurality of valves provided at the combustion chamber 114.

The piston 86 forms the combustion chamber 114 together with the cylinder head 128 of the engine 44. The piston 86 receives pressure from combustion gas in the combustion chamber 114 to rotate the crankshaft 56. The piston 86 is attached to the crankshaft 56. The piston 86 has a piston head 116, piston rings 118, the piston pin 120, and the connecting rod 122.

The piston head 116 has a disk shaped tip end surface 124 and a cylindrical part that extends backward in a vertical direction from the circumferential end of the tip end surface 124. The piston head 116 has a piston boss into which the piston pin 120 can be inserted at a side surface. Three ring grooves into which the piston rings 118 can be inserted are formed at a front side of the piston boss of the piston head 116. A valve relief is formed at the tip end surface 124 of the piston head 116.

The piston ring 118 has two compression rings and an oil ring. The compression rings are inserted into the two ring grooves closer to the tip end surface 124. The oil ring prevents fuel-air gas or combustion gas from being leaked from the gap between the piston 86 and the cylinder body 126 of the cylinder 88. The oil ring scrapes off oil at the guide wall of the cylinder body 126.

The piston pin 120 is inserted into the piston boss of the piston head 116 to connect the connecting rod 122 and the piston head 116.

The connecting rod 122 transmits the motion of the piston head 116 to the crankshaft 56. The connecting rod 122 is connected to the piston head 116 and the crankshaft 56. The connecting rod 122 has cylindrical holes at both ends into which the crank pin 92 or the piston pin 120 can be inserted.

The motive power transmission mechanism 90 transmits the motive power of the crankshaft 56 to the camshaft 142, so that the plurality of valves provided at the combustion chamber 114 are driven. The structure of the motive power transmission mechanism 90 will be described in detail.

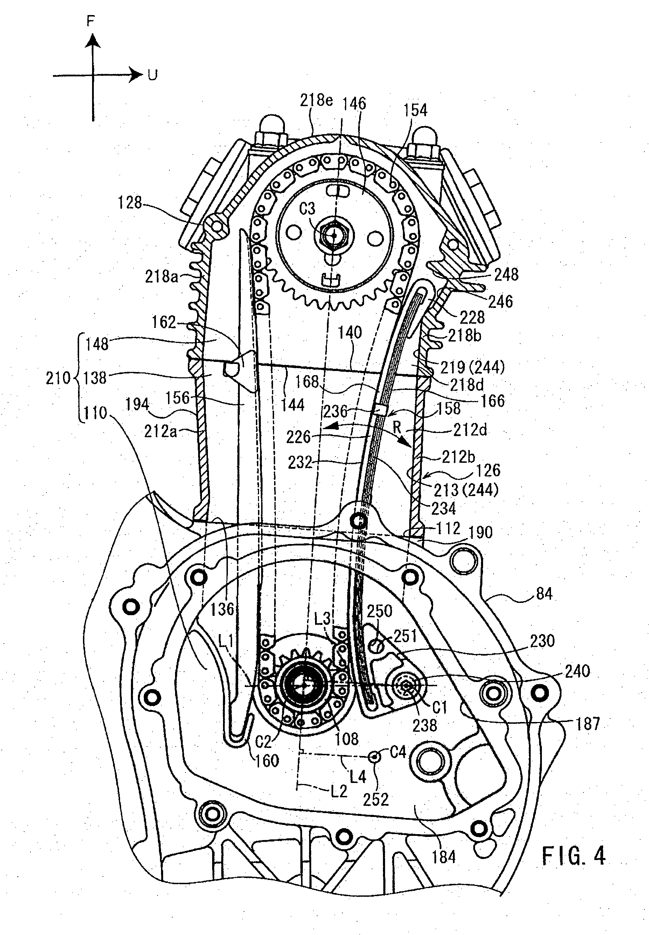

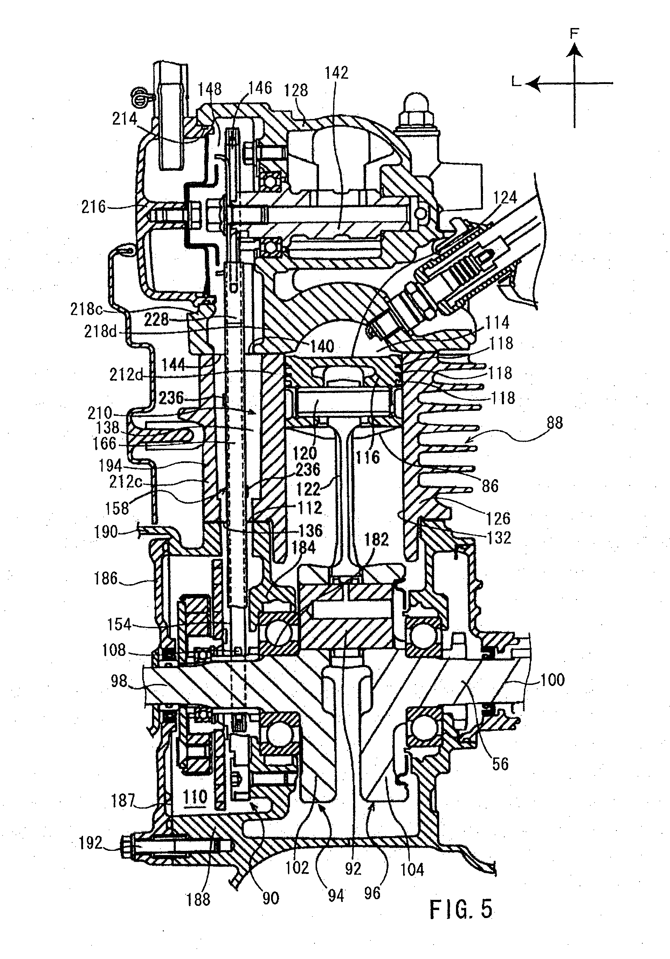

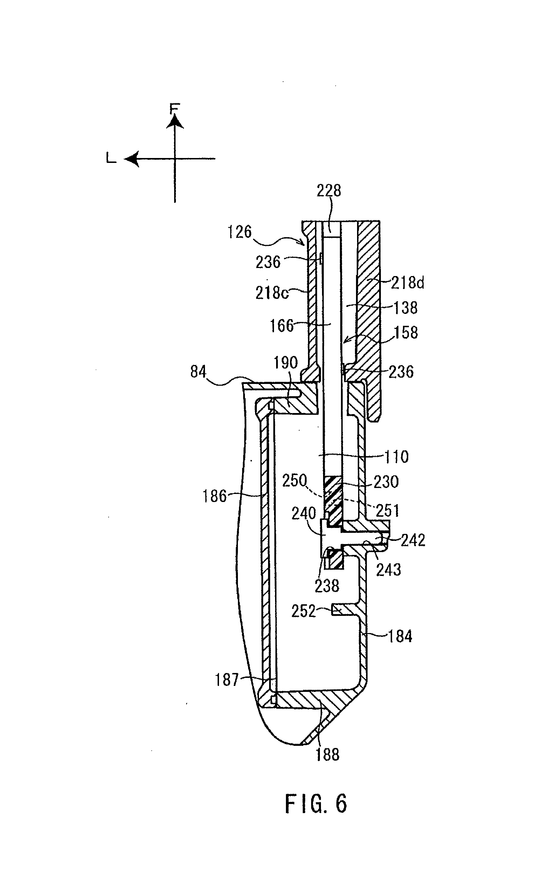

Referring to Figs. 4 to 6, the motive power transmission mechanism 90 will be described. Fig. 4 is a partly sectional view of a chain chamber 210 when viewed from the left. Fig. 5 is a top sectional view showing a part of Fig. 2 being enlarged. Fig. 6 is a top sectional view of a structure of how the tensioner 158 is attached. The arrow F in Figs. 4 to 6 indicates the forward direction of the vehicle, the arrow U in Fig. 4 indicates the upward direction of the vehicle, and the arrow L in Figs. 5 and 6 indicates the leftward direction of the vehicle.

As shown in Figs. 4 and 5, the motive power transmission mechanism 90 is stored in the chain chamber 210. The motive power transmission mechanism 90 has a first sprocket 108, a second sprocket 146, a cam chain 154, a chain guide 156, and the tensioner 158.

The chain chamber 210 is provided on the left side of the piston 86. The chain chamber 210 has a first space 110 provided in the crankcase 84, a second space 138 provided in the cylinder body 126, and a third space 148 provided in the cylinder head 128.

The first space 110 stores the first sprocket 108. The first space 110 extends in a direction orthogonal to a straight line that connects an axial center of the crankshaft 56 and an axial center of the camshaft 142 when viewed in an axial direction of the crankshaft 56, i.e., in a direction orthogonal to the surface of the sheet of Fig. 5 (up-down direction). In other words, the space extends in a direction orthogonal to a plane including the crankshaft 56 and the camshaft 142. The first space 110 is surrounded by a first wall 184, a second wall 186, a third wall 188, a fourth wall 190 and the like. The first space 110 is covered with the crankcase 84 in the up-down direction. The first wall 184 is provided with a bearing 182 that supports the first crankshaft 98. As shown in Fig. 2, the second wall 186 is provided on the right side of the driving pulley 50. The third wall 188 connects the first wall 184 and the second wall 186. The fourth wall 190 has a first opening 112 through which the first space 110 is exposed. The second wall 186 is connected with the third wall 188 and the fourth wall 190 by a bolt 192. The second wall 186 covers an opening 187 formed at the crankcase 84. Fig. 4 shows the state in which the second wall 186 is removed and the opening 187 is visible.

The second space 138 is formed in a tubular part 194 of the cylinder body 126. The tubular part 194 has four walls 212a to 212d. The walls 212a to 212d each extend in the front-back direction. The walls 212a to 212d are each formed integrally with an adjacent one among the walls 212a to 212d. Among the four walls 212a to 212d, a pair of walls 212a and 212b opposes each other in the up-down direction as shown in Fig. 4, and a pair of walls 212c and 212d opposes in the left-right direction (in the axial direction of the camshaft 142) as shown in Fig. 5. A second opening 136 overlapping the first opening 112 is formed at one end of the tubular part 194. A third opening 140 that exposes the second space 138 is formed at the other end of the tubular part 194. The tubular part 194 is open only at the above described two ends. The tubular part 194 is in communication with the outside of the second space 138 only at these two ends. The first space 110 and the second space 138 are connected through the first opening 112 and the second opening 136. Stated differently, the first space 110 is connected to the second space 138 through one end of the tubular part 194. The second space 138 is provided on the left side of the cylinder bore 132. The second space 138 is a space having a rectangular section.

The third space 148 stores the second sprocket 146 attached to an end of the camshaft 142. The third space 148 is surrounded by walls 218a to 218d. The walls 218a to 218d extend in the front-back direction. The walls 218a to 218d are each formed integrally with an adjacent one among the walls 218a to 218d. A rear end of each of the walls 218a to 218d is placed on the cylinder body 126. Among the walls 218a to 218d, a pair of walls 218a and 218b is arranged opposed in the up-down direction as shown in Fig. 4, and a pair of walls 218c and 218d is arranged opposed in the left-right direction (the axial direction of the camshaft 142) as shown in Fig. 5. The front ends of the pair of walls 218a and 218b are coupled by a tip end surface 218e. In this way, the top of the third space 148 is closed. As shown in Fig. 5, the cylinder head 128 has a fifth opening 214. The fifth opening 214 is formed at the wall 218c. The cylinder head 128 is attached with a cover 216 that covers the fifth opening 214. A fourth opening 144 that overlaps the third opening 140 is formed at the rear part of the cylinder head 128. The second space 138 and the third space 148 are connected through the third opening 140 and the fourth opening 144. More specifically, the third space 148 is connected to the second space 138 through the tubular part 194.

The first sprocket 108 is attached to the first crankshaft 98. The first sprocket 108 is provided adjacent to the first crank web 94. The first sprocket 108 is a disk shaped member.

The second sprocket 146 is a disk shaped member having a larger diameter than the first sprocket 108. The second sprocket 146 is attached to an end of the camshaft 142 by a bolt.

The cam chain 154 transmits motive power from the first sprocket 108 to the second sprocket 146. The cam chain 154 is wrapped around the first and second sprockets 108 and 146. The cam chain 154 is provided in the first, second, and third spaces 110, 138, and 148. The cam chain 154 is a silent chain according to the embodiment.

The chain guide 156 guides the cam chain 154. The chain guide 156 is provided over the first, second, and third spaces 110, 138, and 148. The chain guide 156 is supported by a first guide support part 160 stored in the crankcase 84 and a second guide support part 162 attached to the cylinder body 126. Note that the second guide support part 162 is provided at the chain guide 156. The chain guide 156 is formed by bending a plate shaped material and baking rubber on the bent material. The chain guide 156 extends in a direction from the first space 110 to the third space 148. Stated differently, the chain guide 156 extends in the front-back direction. The chain guide 156 has one end extended to the vicinity of a bolt 142 as the rotation center of the second sprocket 146. The chain guide 156 has the other end extended to the vicinity of the crankshaft 56 as the rotation center of the first sprocket 108.

The tensioner 158 provides the cam chain 154 with tension. The tensioner 158 is provided over the first space 110, the second space 138, and the third space 148. The tensioner 158 has a plate spring 166 and a blade shoe 168.

The plate spring 166 elastically deforms in response to force received from the cam chain 154. The plate spring 166 is for example made of spring steel and has a rectangular shape. According to the embodiment, the plate spring 166 includes a plurality of plate springs joined on one another. Note that the plate spring 166 may consist of a single plate spring.

The plate spring 166 curves in an arc shape when external force is not applied. The plate spring 166 elastically deforms when external force acts in its thickness-wise direction (in a direction in which the plurality of plate springs are joined on one another or in the up-down direction as shown in Fig. 4).

The blade shoe 168 is attached to the plate spring 166. The blade shoe 168 supports the plate spring 166. The blade shoe 168 allows the plate spring 166 to elastically deform. The blade shoe 168 contacts the cam chain 154. The blade shoe 168 is made for example of a synthetic resin material. The blade shoe 168 includes a main body part 226, a supported part 228, and an attachment portion 230.

The main body part 226 extends along the plate spring 166. The main body part 226 has approximately the same size as that of the plate spring 166 (the size in a direction perpendicular to the surface of the sheet of Fig. 4). The main body part 226 has a raised curve surface 232 and a recessed curve surface 234. The raised curve surface 232 is in contact with the cam chain 154 between the first and second sprockets 108 and 146. The plate spring 166 is provided along the recessed curve surface 234. The plate spring 166 elastically deforms when external force acts from the side of the raised curve surface 232 to the side of the recessed curve surface 234. As shown in Fig. 5, the main body part 226 includes a pair of support pieces 236. The pair of support pieces 236 is provided apart in the front-back direction. The pair of support pieces 236 prevents the plate spring 166 from moving in the left-right direction and coming off from the blade shoe 168.

The supported part 228 is provided at one end of the main body part 226. The supported part 228 is in contact with the plate spring 166 and supports an end (front end) of the plate spring 166 together with the main body part 226. A tip end of the supported part 228 is in contact with the plate spring 166. A gap forms between the base end of the supported part 228 (the end coupled with the main body 226) and the front end of the plate spring 166. In this way, the front end of the plate spring 166 is allowed to move to the front end side of the main body part 226.

The attachment portion 230 is provided at the other end of the main body part 226. The attachment portion 230 is in contact with the plate spring 166 and supports the other end (rear end) of the plate spring 166 together with the main body part 226. The tip end part of the attachment portion 230 is in contact with the plate spring 166. A gap forms between the base end of the attachment portion 230 (the end coupled with the main body part 226) and the rear end of the plate spring 166. In this way, the rear end of the plate spring 166 is allowed to move to the rear end side of the main body part 226.

As shown in Fig. 6, the attachment portion 230 includes a support hole 238. A support shaft 240 is inserted into the support hole 238. The support shaft 240 is screwed to the crankcase 84. More specifically, a bolt portion 242 is formed at one end of the support shaft 240. A screw hole 243 is formed in the crankcase 84. The bolt portion 242 and the screw hole 243 serve to screw the support shaft 240 to the crankcase 84. As shown in Fig. 4, the support shaft 240 screwed to the crankcase 84 is positioned above the first sprocket 108. The support shaft 240 extends approximately parallel to the crankshaft 56.

While the support shaft 240 is inserted in the support hole 238, the tensioner 158 is allowed to swing around the support shaft 240. More specifically, the tensioner 158 can swing in a direction indicated by the arrow R in Fig. 4. In this state, the supported part 228 is in contact with the inner side of the cylinder head 128. Note that the supported part 228 may contact the cylinder body 126 while the tensioner 158 is swingable around the support shaft 240.

As shown in Fig. 4, the plate spring 166 is held in a position apart from the contact surface 244 while the supported part 228 is in contact with the inside of the cylinder head 128. The contact surface 244 is a surface contacted by the supported part 228 while the tensioner 158 is provided swingably around the support shaft 240. The contact surface 244 is a surface contacted by the supported part 228 when the tensioner 158 is inserted into the chain chamber 210. The contact surface 244 includes an inner side surface 213 of the wall 212b of the tubular part 91 and an inner side surface 219 of the wall 218b of the cylinder head 128. The inner side surface 219 is a surface contacted by the supported part 228 while the tension providing member is provided swingably around the support shaft 240. The inner side surface 213 is a surface contacted by the supported part 228 while the tensioner 158 is provisionally fixed. More specifically, according to the embodiment, the inner side surface 219 corresponds to a support surface and the inner side surface 213 corresponds to a provisional support surface.

According to the embodiment, a recess 246 is formed in the cylinder head 128. As shown in Fig. 4, a base end of the supported part 228 enters the recess 246. In this state, a side surface of the supported part 228 contacts an edge of the recess 246. Note that according to the embodiment, the recess 246 is provided but the supported 228 may be supported without providing the recess 246.

The recess 246 is positioned above the second sprocket 146. The recess 246 is positioned behind the rotation center of the second sprocket 146 when viewed from above as shown in Fig. 4. The recess 246 is open downward.

As shown in Fig. 4, the recess 246 is open to the inside of the cylinder head 128. The recess 246 is formed at the wall 218b. The recess 246 is open to the inner side surface 219. The inner surface 246 of the recess forms a part of the inner side surface 219.

The recess 246 includes an opposing surface 248. The opposing surface 248 is opposed to the supported part 228 entered inside the recess 246. The opposing surface 248 is opposed to the supported part 228 in a direction in which the supported part 228 moves in the recess 246. The supported part 228 moves forward and obliquely upward in the recess 246. The opposing surface 248 expands in a direction approximately orthogonal to the moving direction of the supported part 228 in the recess 246. In this way, the supported part 228 in contact with the opposing surface 248 can be prevented from moving from the position and coming off from the recess 246. Note that the opposing surface 248 does not have to expand in a direction approximately orthogonal to the moving direction of the supported part 228 in the recess 246. For example, the opposing surface 248 that expands in a direction orthogonal to the front-back direction may be employed.

The supported part 228 has its side surface in contact with an edge of the recess 246 on the side of the cylinder head main body 214 while its base end is inside the recess 246. More specifically, the supported part 228 is in contact with the wall 218b of the cylinder head main body 214. The supported part 228 is apart from the inner surface of the recess 246 while being entered in the recess 246.

As shown in Figs. 4 and 6, the attachment portion 230 includes an insertion hole 250. The insertion hole 250 is positioned more on the tip end side of the attachment portion 230 than the support hole 238. The insertion hole 250 and the support hole 238 are parallel to each other. Stated differently, the insertion hole 250 extends approximately parallel to the crankshaft 56.

The insertion hole 250 penetrates through the attachment portion 230 in the thickness-wise direction (the left-right direction). Note that according to the embodiment, the insertion hole 250 penetrating through the attachment portion 230 is employed, while a hole having a bottom, a groove, or a notch may be employed.

A support pin 252 is inserted in the insertion hole 250. The support pin 252 is integrally formed with the first wall 184.

The support pin 252 extends approximately parallel to the crankshaft 56. Stated differently, the support pin 252 and the support shaft 240 are parallel to each other.

When viewed in the axial direction of the crankshaft 56, the support pin 252 is positioned on the opposite side to the second sprocket 146 with respect to a straight line L1 that connects the center C1 of the support shaft 240 and the center C2 of the first sprocket 108. Stated differently, the support pin 252 is positioned behind the support shaft 240 and behind the center C2 of the first sprocket 108.

When viewed in the axial direction of the crankshaft 56, the support pin 252 is positioned more on the side of the inner side surface 213 than the part of the cam chain 154 wrapped around the first sprocket 108 as shown in Fig. 4. Stated differently, the support pin 252 is positioned on the opposite side to the chain guide 156 with respect to the part of the cam chain 154 wrapped around the first sprocket 108. In other words, the support pin 252 is positioned above the part of the cam chain 154 wrapped around the first sprocket 108.

When viewed in the axial direction of the crankshaft 56, the support shaft 240 is positioned further from the support pin 252 with respect to a straight line L2 that connects the center C2 of the first sprocket 108 and the center C3 of the second sprocket 146 as shown in Fig. 4. More specifically, the vertical line L3 from the center C1 of the support shaft 240 to the straight line L2 is longer than the vertical line L4 from the center C4 of the support pin 252 to the straight line L2.

Now, referring to Figs. 2 and 3, an operation of transmitting motive power from the engine 44 to the rear wheel will be described.

To start with, the crankshaft 56 rotates. As the crankshaft 56 rotates the first sprocket 108 attached to the crankshaft 56 rotates. The motive power of the first sprocket 108 is transmitted to the second sprocket 146 through the cam chain 154. As the second sprocket 146 rotates, the camshaft 142 rotates. As the camshaft 142 rotates, a plurality of valves is driven. Simultaneously with the driving of the plurality of valves, the piston 86 is driven by the rotation of the crankshaft 56. In this way, air is taken into the combustion chamber 114. Then, fuel is supplied to the combustion chamber 114 from the fuel supply device. Then, as the crankshaft 56 rotates, an air-fuel mixture is compressed, and the fuel mixture of air and fuel is ignited. As the air-fuel mixture is burnt, the piston head 116 is moved and the crankshaft 56 rotates to drive the valves. The valves are driven, which discharges exhaust gas from the combustion chamber 114 to the outside. Note that at the starting of the engine 44, the crankshaft 56 rotates with motive power from a starter which is not shown.

As the crankshaft 56 rotates, the motive power rotates the driving pulley 50 of the transmission 46. The motive power of the driving pulley 50 is transmitted to the driven pulley 52 through the V belt 54. As the rotation speed of the driven pulley 52 increases, the clutch shoe 80 of the centrifugal clutch 48 comes into contact with the clutch housing 78. Then, the motive power of the centrifugal clutch 48 is transmitted to the first output side shaft 70. The motive power transmitted to the first output side shaft 70 is transmitted to a second output side shaft 180 by a cam that is not shown, so that the motive power is transmitted to the rear wheel 16 from the second output side shaft 180.

### Attaching Operation

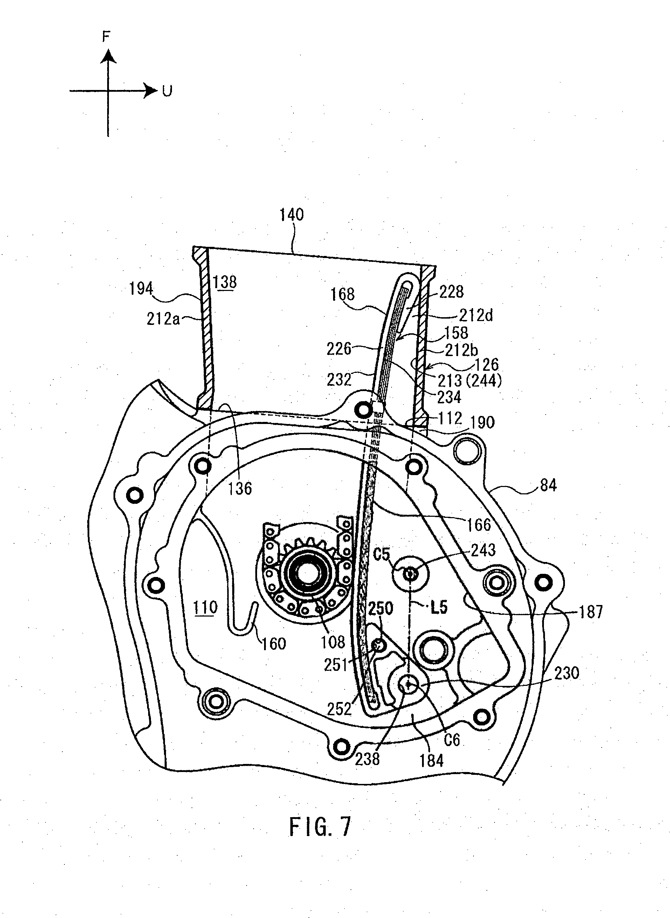

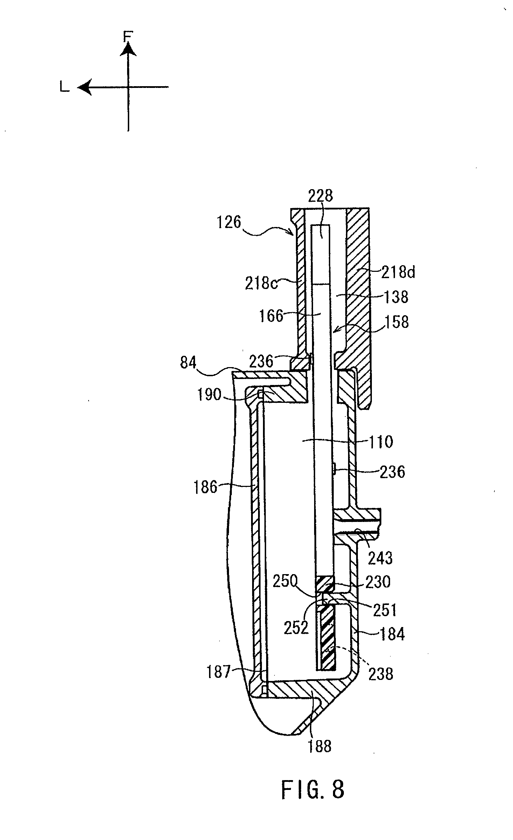

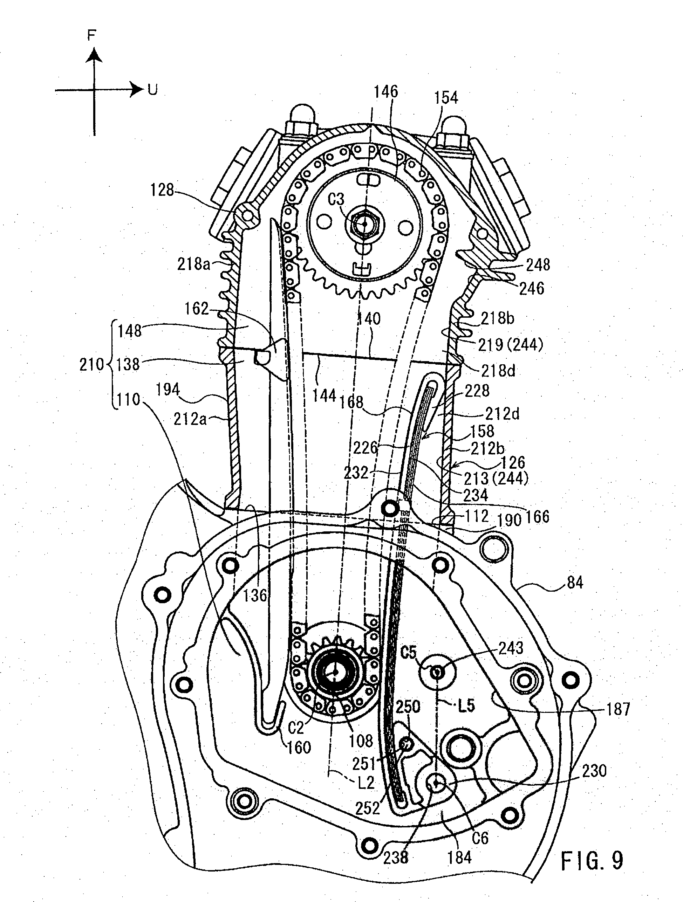

How to attach the cam chain 154 during assembly or maintenance of the engine 44 will be described in conjunction with Figs. 4 and 7 to 9. Fig. 7 is a partly sectional view showing a step in a method of assembling the engine 44. Fig. 8 is a top sectional view showing a state of how the tensioner is supported in the step shown in Fig. 7. Fig. 9 is a partly sectional view of a step in the method of assembling the engine 44 showing a step subsequent to the step shown in Fig. 7.

To start with, the crankcase 84 is prepared. The cam chain 154 is wrapped around the first sprocket 108. The cylinder body 126 is attached to the crankcase 84.

The tensioner 158 is inserted to the tubular part 194 from the side of the crankcase 84. More specifically, the tensioner 158 is inserted into the tubular part 194 through the opening 187. The tensioner 158 is inserted above the cam chain 154. At the time, the main body part 226 is positioned on the side of the cam chain 154 and the plate spring 166 is positioned on the side of the inner side surface 213. The plate spring 166 is apart from the inner side surface 213. The main body part 226 contacts a part of the cam chain 154 wrapped around the first sprocket 108. The supported part 228 contacts the inner side surface 213. The supported part 228 slides from the side of the second opening 136 toward the third opening 140.

As shown in Figs. 7 and 8, the support pin 252 is inserted to the insertion hole 250. At the time, an inner circumferential surface 251 of the insertion hole 250 contacts an outer circumferential surface of the support pin 252. More specifically, the inner circumferential surface 251 serves as a provisional support part according to the embodiment. A tip end of the support pin 252 is positioned in the insertion hole 250. In other words, the tip end of the support pin 252 is positioned inside the insertion hole 250 without projecting to the left of the insertion hole 250 (see Fig. 8). The supported part 228 contacts the inner side surface 213 near the third opening 140.

At the time, the plate spring 166 is elastically deformed. The restoring force of the plate spring 166 acts on the inner side surface 213, the part of the cam chain 154 wrapped around the first sprocket 108 and the support pin 252. Therefore, the supported part 228 receives reaction force directed from the inner side surface 213 to the tensioner 158 from the inner side surface 213. The main body part 226 receives reaction force directed from the first sprocket 108 to the tensioner 158 from the part of the cam chain 154 wrapped around the first sprocket 108. The inner circumferential surface 251 of the insertion hole 250 receives reaction force directed from the support pin 252 to the tensioner 158 from the support pin 252. The inner side surface 213, the part of the cam chain 154 wrapped around the first sprocket 108, and the support pin 252 provisionally fix the tensioner 158. At the time, as shown in Fig. 7, a screw hole 243 and a support hole 238 overlap each other in a direction approximately parallel to the inner side surface 213. In other words, a straight line L5 that connects the center C5 of the screw hole 243 and the center C6 of the support hole 238 extends in a direction approximately parallel to the inner side surface 213.

The chain guide 156 is inserted into the tubular part 194 from the side of the third opening 140. The chain guide 156 is supported by the first and second guide support parts 160 and 162. The cam chain 154 is placed on the chain guide 156.

The cylinder head main body 214 is attached to the cylinder body 126. In this state, the second sprocket 146 is not attached to the camshaft 142.

The cam chain 154 is wrapped around the second sprocket 146. The second sprocket 146 is attached to the camshaft 142. These kinds of operation are carried out through the fifth opening 214 (see Fig. 5).

At the time, the tensioner 158 is provisionally fixed by the inner side surface 213, the part of the cam chain 154 wrapped around the first sprocket 108, and the support pin 252. Therefore, force from the tensioner 158 does not act on the part of the cam chain 154 positioned between the first and second sprockets 108 and 146 and on the side of the contact surface 244. This makes it easier to wrap the cam chain 154 around the second sprocket 146.

The fifth opening 214 (see Fig. 5) is covered with a cover 216. In this way, the chain chamber 210 including the first space 110, the second space 138, and the third space 146 is formed.

In this state, as shown in Fig. 9, the tensioner 158 is provisionally fixed by the inner side surface 213, the part of the cam chain 154 wrapped around the first sprocket 108, and the support pin 252. At the time, the support shaft 240 and the support pin 252 overlap each other in a direction approximately parallel to a part of the inner side surface 219 that is continuous to the inner side surface 213. Stated differently, the straight line L5 that connects the center C5 of the screw hole 243 and the center C6 of the support hole 238 is approximately parallel to the part of the inner side surface 219 that is continuous with the inner side surface 213. At the time, the straight line L5 is approximately parallel to the straight line L2.

The tensioner 158 is released from its provisionally fixed state so that the tensioner 158 can be inserted further to the side of the cylinder head 128. More specifically, the support pin 252 is pulled out from the insertion hole 250. The operation is carried out by moving the attachment portion 230 to the left. More specifically, the support pin 252 can be pulled out from the insertion hole 250 by moving the attachment portion 230 to the front side in a direction orthogonal to the surface of the sheet of Fig. 9.

Once the tensioner 158 is released from its provisionally fixed state, the tensioner 158 is inserted further to the side of the cylinder head 128. The supported part 228 moves from the inside of the second space 138 into the third space 148. In the third space 148, the supported part 228 contacts the inner side surface 219. The supported part 228 slides on the inner surface side 219.

The supported part 228 comes into the recess 246. If the supported part 228 comes into the recess 246 with excessive force, the supported part 228 contacts the opposing surface 248. This restricts the entering of the supported part 228 into the recess 246. While the supported part 228 is in the recess 246, the support hole 238 is positioned near the screw hole 243. The tensioner 158 is moved so that the support hole 238 and the screw hole 243 are aligned. The support shaft 240 is screwed to the crankcase 84. In this way, the tensioner 158 is allowed to swing around the support shaft 240 as shown in Fig. 4.

At the time, as shown in Fig. 4, a side surface of supported part 228 contacts the inner side surface 219. The supported part 228 receives reaction force directed from the inner side surface 219 toward the supported part 228 from the wall 218b.

As shown in Fig. 4, the raised curve surface 232 of the main body part 226 contacts the cam chain 154. The main body part 226 receives reaction force directed from the cam chain 154 toward the main body 226 from the cam chain 154.

According to the embodiment, the support pin 252 is provided in addition to the support shaft 240. The support pin 252 is positioned on the opposite side to the second sprocket 146 with respect to the straight line L1 that connects the center C1 of the support shaft 240 and the center C2 of the firs sprocket 108 when viewed in the axial direction of the crankshaft 56. The support pin 252 is positioned more on the side of the inner side surface 213 than the part of the cam chain 154 wrapped around the first sprocket 108. Therefore, the tensioner 158 can be provisionally fixed by the inner side surface 213, the part of the cam chain 154 wrapped around the first sprocket 108, and the support pin 252. This makes it easier to wrap the cam chain 154 around the first and second sprockets 108 and 146.

According to the embodiment, the cylinder body 126 is attached to the crankcase 84, but while the cylinder head 128 is not attached to the cylinder body 126 and the tensioner 158 is inserted in the tubular part 194 from the side of the crankcase 84, the supported part 228 contacts the inner side surface 213 and receives reaction force directed from the inner surface 213 to the tensioner 158 from the inner side surface 213. The inner circumferential surface 251 of the insertion hole 250 contacts the support pin 252 and receives reaction force directed from the support pin 252 to the tensioner 158 from the support pin 252. The main body part 226 contacts the part of the cam chain 154 wrapped around the first sprocket 108 and receives reaction force directed from the first sprocket 108 to the tensioner 158 from the part of the cam chain 154 wrapped around the first sprocket 108. The provisionally fixed state of the tensioner 158 is thus stabilized.

According to the embodiment, while the cylinder body 126 is attached to the crankcase 84, the cylinder head 128 is attached to the cylinder body 126 and the tensioner 158 is inserted in the tubular part 194 and the cylinder head 128 from the side of the crankcase 84, the support shaft 240 is inserted in the support hole 238, so that the tensioner 158 is supported swingably around the support shaft 240. The supported part 228 contacts the inner side surface 219 and receives reaction force directed from the inner side surface 219 to the tensioner 158 from the inner side surface 219. The main body part 226 contacts the cam chain 154 wrapped around the first and second sprockets 108 and 146, and receives reaction force directed from the cam chain 154 to the tensioner 158 from the cam chain 154. The cam chain 154 can be provided with stable tension.

According to the embodiment, when viewed in the axial direction of the crankshaft 56, the support shaft 240 (screw hole 243) is in a position further than the support pin 252 with respect to the straight line L2 that connects the center C2 of the first sprocket 108 and the center C3 of the second sprocket 146. While the plate spring 166 is elastically deformed, the tensioner 158 can be provisionally fixed. The provisionally fixed state of the tensioner 158 is thus stabilized.

According to the embodiment, while the tensioner 158 is supported by the inner side surface 213, the part of the cam chain 154 wrapped around the first sprocket 108 and the support pin 252, the screw hole 243 and the support hole 238 are arranged in a direction approximately parallel to the inner side surface 219. When the tensioner 158 is released from its provisionally fixed state and is inserted further, the tensioner 158 may be inserted having its shape maintained as in the provisionally fixed state.

According to the embodiment, the support shaft 240 can be removed from the crankcase 84. The support shaft 240 is easily inserted to the support hole 238.

According to the embodiment, the insertion hole 250 is formed in the blade shoe 168. The insertion hole 250 is easily formed.

According to the embodiment, the insertion hole 250 is positioned more on the side of the supported part 228 than the support hole 238. This can prevent the blade shoe 168 from being unnecessarily elongated.

According to the embodiment, the tensioner 158 includes the insertion hole 250 into which the support pin 252 is inserted and the inner circumferential surface 251 of the insertion hole 250 serves as a provisional support part. While the support pin 252 is inserted in the insertion hole 250, the tensioner 158 is provisionally fixed. The provisionally fixed state of the tensioner 158 is thus stabilized.

According to the embodiment, the insertion hole 250 is a through hole. The insertion hole 250 can be formed easily.

According to the embodiment, while the support pin 252 is inserted in the insertion hole 250, a tip end of the support pin 252 is positioned in the insertion hole 250. The support pin 252 can be pulled out from the insertion hole 250 more easily.

According to the embodiment, the support pin 252 is integrally formed with the crankcase 84. Strength for the support pin 252 can be easily secured.

According to the embodiment, the motorcycle 10 includes the above-described engine 44. This makes it easier to wrap the cam chain 154 around the first and second sprockets 108 and 146.

In a method of assembling the engine 44 according to embodiment, the crankcase 84 having the crankshaft 56, the first space 110 that stores the first sprocket 108 attached to the crankshaft 56, and the support pin 252 provided in the first space 110 is prepared. The cam chain 154 is wrapped around the first sprocket 108. The cylinder body 126 having the tubular part 194 that forms the second space 138 connected to the first space 110 is attached to the crankcase 84. The tensioner 158 including the plate spring 166 and the blade shoe 168 that supports the plate spring 166 is inserted to the tubular part 194 from the side of the crankcase 84, and the tensioner 158 is provisionally fixed by the inner side surface 213 formed at the tubular part 194, the part of the cam chain 154 wrapped around the first sprocket 108, and the support pin 252. The cylinder head 128 having the third space 148 that stores the second sprocket 146 attached to the camshaft 142 and is connected to the second space 138 is attached to the cylinder body 126 and the chain chamber 210 including the first, second, and third spaces 110, 138, and 148 is formed. The cam chain 154 is wrapped around the second sprocket 146. The tensioner 158 is released from its provisionally fixed state achieved by the inner side surface 213, the part of the cam chain 154 wrapped around the first sprocket 108, and the support pin 252. The tensioner 158 is inserted further to the side of the cylinder head 128 from its provisionally fixed state achieved by the inner side surface 213, the part of the cam chain 154 wrapped around the first sprocket 108, and the support pin 252, so that the supported part 228 of the tensioner 158 is contacted to the inner side surface 219 formed at the cylinder head 128. While the supported part 228 of the tensioner 158 is in contact with the inner side surface 219, the support shaft 240 provided in the first space 110 of the crankcase 84 is inserted in the support hole 238 formed in the tensioner 158 and the tensioner 158 is supported swingably around the support shaft 240. Since the tensioner 158 can be provisionally fixed, the cam chain 154 can easily be wrapped around the first and second sprockets 108 and 146.

### Second Embodiment

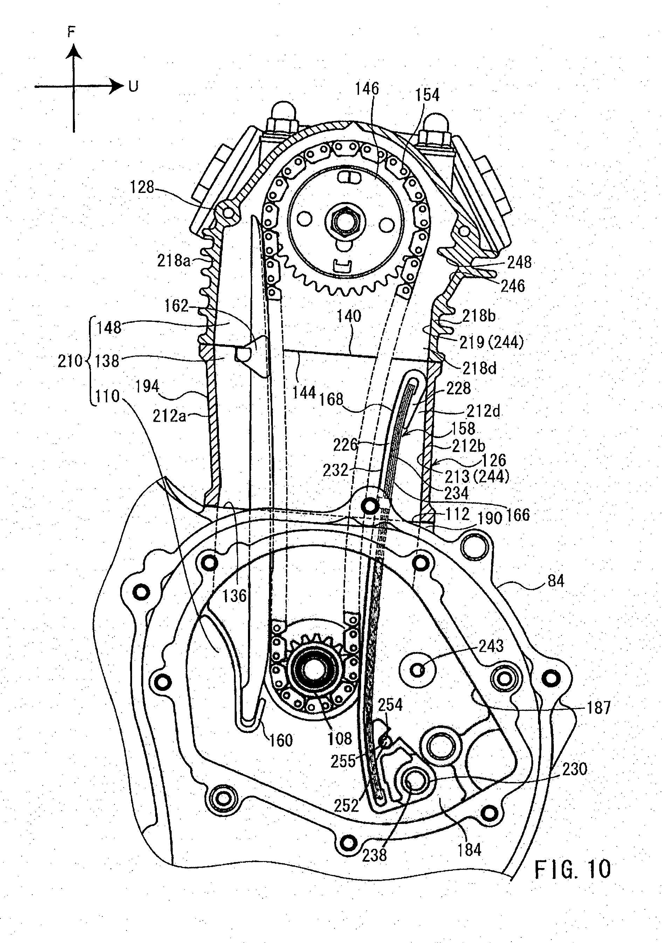

Referring to Fig. 10, a second embodiment of the present invention will be described. Fig. 10 is a partly sectional view of the chain chamber 210 when viewed from the left showing the tensioner 158 in a provisionally fixed state.

The tensioner 158 may have a notch 254 instead of the insertion hole 250. In this case, the outer circumferential surface of the support pin 252 contacts an inner surface 255 of the notch 254. More specifically, according to the embodiment, the inner surface 255 of the notch 254 serves as a provisional support part.

According to the embodiment, the tensioner 158 includes the notch 254 entered by the support pin 252, and the inner surface 255 of the notch 254 serves as the provisional support part. While the support pin 252 is entered in the notch 254, the tensioner 158 is provisionally fixed. This stabilizes the provisionally fixed state of the tensioner 158.

### Third Embodiment

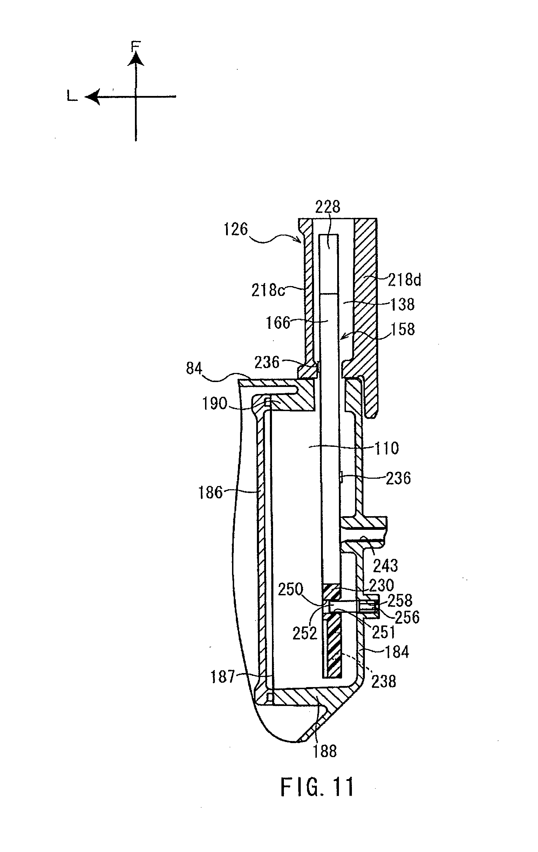

Referring to Fig. 11, a third embodiment of the present invention will be described. Fig 11 is a top sectional view of an attachment structure for the tensioner showing the tensioner in a provisionally fixed state.

The support pin 252 may be removable from the first wall 184 of the crankcase 84. A bolt 256 is formed at one end of the support pin 252. A screw hole 258 is formed at the first wall 184. The support pin 252 is attached to the first wall 184 by the bolt 256 and the screw hole 258. Note that the way of attaching the support pin 252 to the first wall 184 is not limited to the use of the bolt 256 and the screw hole 258. For example, a through hole is formed in the first wall 184 and the support pin 252 needs only be inserted into the through hole.

According to the embodiment, the support pin 252 is removable from the crankcase 84. When the tensioner 158 is fixed swingably around the support shaft 240, the support pin 252 can be removed. The necessity of providing extra parts is eliminated. When the support pin 252 is removed, the screw hole 258 may be covered with another member or filled with another member.

According to the embodiment, the motorcycle 10 has one cylinder 88 by way of illustration but the invention is not limited to the arrangement and may be applied to a motorcycle having a plurality of cylinders.

According to the embodiment, the motorcycle 10 has one camshaft 142 by way of illustration but the invention is not limited to the arrangement and can be applied to a motorcycle having two camshafts.

According to the embodiment, a cylinder head having a cylinder head main body and a head cover may be employed as a cylinder head.

According to the embodiment, the motorcycle has been described but the invention can be applied to a three- or four- wheeled leaning vehicle or the like.

In the foregoing, although the embodiments of the present invention have been described, it is clearly understood that the same is by way of illustration and example only and is not to be taken by way of limitation.

## Claims

1. An engine (44) having a chain chamber (210), comprising:
a crankshaft (56);
a camshaft (142);
a first sprocket (108) attached to said crankshaft (56);
a second sprocket (146) attached to said camshaft (142);
a crankcase (84) that stores said first sprocket (108);
a cylinder body (126) attached to said crankcase (84),
a cylinder head (128) attached to said cylinder body (126) to store said second sprocket (146);
a chain (154) wrapped around said first and second sprockets (108, 146); and
a tension providing member (158) that provides said chain (154) with tension,
said crankcase (84), said cylinder body (126), and said cylinder head (128) forming said chain chamber (210) that stores said chain (154) and said tension providing member (158),
said cylinder body (126) comprising a tubular part (194) that forms a part of said chain chamber (210),
said tension providing member (158) comprising:
a plate spring member (166) curved in an arch shape when viewed in an axial direction of said crankshaft (56); and
a contact member (168) that supports said plate spring member (166) and contacts said chain (154) in said chain chamber (210),
said crankcase (84) comprising:
a support shaft (240) inserted to a support hole (238) formed at said tension providing member (158) to support said tension providing member (158) in a swingable manner;
said chain chamber (210) comprising:
a support surface (219) that contacts one part (228) of said tension providing member (158) to support said one part (228) in a slidable manner while said tension providing member (158) is supported by said support shaft (240);
**characterized by**
said crankcase (84) comprising
a provisional support shaft (252) positioned on an opposite side to said second sprocket (146) with respect to a straight line (L1) that connects a center (C1) of said support shaft (240) and a center (C2) of said first sprocket (108) when viewed in an axial direction of said crankshaft (56) and contacting a provisional support part (251; 255) formed at said tension providing member (158) to support said tension providing member (158), said chain chamber (210) comprising
a provisional support surface (213) that contacts said one part (228) of said tension providing member (158) to support said one part (228) in a slidable manner while said tension providing member (158) is supported by said provisional support shaft (252),
said provisional support shaft (252) being positioned more on the side of said provisional support surface side than a part of said chain (154) wrapped around said first sprocket (108) when viewed in the axial direction of said crankshaft (56).

2. The engine (44) according to claim 1, wherein while said cylinder body (126) is attached to said crankcase (84), said cylinder head (128) is not attached to said cylinder body (126) and said tension providing member (158) is inserted in said tubular part (194) from said crankcase side,
said one part (228) of said tension providing member (158) contacts said provisional support surface (213) and receives reaction force directed from said provisional support surface (213) to said tension providing member (158) from said provisional support surface (213),
said provisional support part (251; 255) contacts said provisional support shaft (252) and receives reaction force directed from said provisional support shaft (252) to said tension providing member (158) from said provisional support shaft (252), and
a part in said tension providing member (158) positioned between said one part (228) and said provisional support part (251; 255) contacts the part of said chain (154) wrapped around said first sprocket (108) and receives reaction force directed from said first sprocket (108) to said tension providing member (158) from the part of said chain (154) wrapped around said first sprocket (108).

3. The engine (44) according to claim 1 or 2, wherein while said cylinder body (126) is attached to said crankcase (84), said cylinder head (128) is attached to said cylinder body (126) and said tension providing member (158) is inserted in said tubular part (194) and said cylinder head (128) from said crankcase side,
said support shaft (240) is inserted to said support hole (238), so that said tension providing member (158) is supported swingably around said support shaft (240),
said one part (228) of said tension providing member (158) contacts said support surface (219) and receives reaction force directed from said support surface (219) to said tension providing member (158) from said support surface (219), and
a part in said tension providing member (158) positioned between said one part (228) and said support hole (238) contacts said chain (154) wrapped around said first and second sprockets (108, 146) and receives reaction force directed from said chain (154) to said tension providing member (158) from said chain (154).

4. The engine (44) according to any one of claims 1 to 3, wherein said support shaft (240) is positioned further than said provisional support shaft (252) with respect to a straight line (L2) that connects a center (C2) of said first sprocket (108) and a center (C3) of said second sprocket (146) when viewed in the axial direction of said crankshaft (56).

5. The engine (44) according to any one of claims 1 to 4, wherein while said tension providing member (158) is supported by said provisional support surface (213), the part of said chain (154) wrapped around said first sprocket (108) and said provisional support shaft (252), said support shaft (240) and said support hole (238) overlap each other in a direction parallel to said support surface (219) or said provisional support surface (213).

6. The engine (44) according to any one of claims 1 to 5, wherein said support shaft (240) is removable from said crankcase (84).

7. The engine (44) according to any one of claims 1 to 6, wherein said provisional support part (251; 255) is formed at said contact member (168).

8. The engine (44) according to any one of claims 1 to 7, wherein said provisional support part (251; 255) is positioned more on the side of said one part (228) of said tension providing member (158) than said support hole (238).

9. The engine (44) according to any one of claims 1 to 8, wherein said tension providing member (158) comprises an insertion hole (250) into which said provisional support shaft (252) is inserted and an inner circumferential surface (251) of said insertion hole (250) is said provisional support part (251).

10. The engine (44) according to claim 9, wherein while said provisional support shaft (252) is inserted in said insertion hole (250), a tip end of said provisional support shaft (252) is positioned inside said insertion hole (250).

11. The engine (44) according to any one of claims 1 to 8, wherein said provisional support part (255) includes a notch (254) which is entered by said provisional support shaft (252) and an inner surface (255) of said notch (254) is said provisional support part (255).

12. The engine (44) according to any one of claims 1 to 11, wherein said provisional support shaft (252) is integrally formed with said crankcase (84).

13. The engine (44) according to any one of claims 1 to 11, wherein said provisional support shaft (252) is removable from said crankcase (84).

14. A saddle riding type vehicle comprising an engine (44) according to any one of claims 1 to 13.

15. A method of assembling an engine (44), comprising the steps:
preparing a crankcase (84) having a crankshaft (56), a first space (110) that stores a first sprocket (108) attached to said crankshaft (56) and a provisional support shaft (252) provided in said first space (110);
wrapping a chain (154) around said first sprocket (108);
attaching a cylinder body (126) having a tubular part (194) that forms a second space (138) connected to said first space (110) to said crankcase (84);
inserting a tension providing member (158) including a plate spring member (166) and a contact member (168) that supports said plate spring member (166) into said tubular part (194) from said crankcase side and provisionally fixing said tension providing member (158) by a provisional support surface (213) formed at said tubular part (194), a part of said chain (154) wrapped around said first sprocket (108) and said provisional support shaft (252);
attacking a cylinder head (128) having a third space (148) that stores a second sprocket (146) attached to a camshaft (142) and is connected to said second space (138) to said cylinder body (126), thereby forming a chain chamber (210) including said first, second, and third spaces (110, 138, 148);
wrapping said chain (154) around said second sprocket (146);
releasing said tension providing member (158) from a provisionally fixed state achieved by said provisional support surface (213), the part of said chain (154) wrapped around said first sprocket (108), and said provisional support shaft (252);
inserting said tension providing member (158) further to said cylinder head side from its provisionally fixed state achieved by said provisional support surface (213), the part of said chain (154) wrapped around said first sprocket (108), and said provisional support shaft (252) and having one of said tension providing member (158) contacts a support surface (219) formed at said cylinder head (128); and
inserting the support shaft (240) provided in said first space (110) of said crankcase (84) into a support hole (238) formed at said tension providing member (158) and supporting said tension providing member (158) in a swingable manner around said support shaft (240) while said one part (228) of said tension providing member (158) is in contact with said support surface (219).

## Patentansprüche

1. Ein Motor (44), der eine Kettenkammer (210) hat, umfasst:
eine Kurbelwelle (56);
eine Nockenwelle (142);
ein erstes Kettenrad (108), angebracht an dieser Kurbelwelle (56);
ein zweites Kettenrad (146), angebracht an dieser Nockenwelle (142);
ein Kurbelgehäuse (84), welches das erste Kettenrad (108) aufnimmt;
einen Zylinderkörper (126), angebracht an diesem Kurbelgehäuse (84),
ein Zylinderkopf (128), angebracht an diesen Zylinderkörper (126), um dieses zweite Kettenrad (146) aufzunehmen;
eine Kette (154), gewickelt um dieses erste und zweite Kettenrad (108, 146); und
ein Spannungs-Bereitstellungselement (158), welches die Kette (154) mit einer Spannung versieht,
dieses Kurbelgehäuse (84), dieser Zylinderkörper (126), und dieser Zylinderkopf (128) bilden diese Kettenkammer (201), welche diese Kette (154) und dieses Spannungs-Bereitstellungselement (158) aufnehmen,
dieser Zylinderkörper (126) umfasst ein Rohrteil (194), welches einen Teil dieser Kettenkammer (210) bildet,
dieses Spannungs-Bereitstellungselement (158) umfasst:
ein Platten-Federelement (166), gebogen in eine Bogenform, wenn in eine axiale Richtung dieser Kurbelwelle (56) betrachtet; und
ein Kontaktelement (168), welches dieses Platten-Federelement (166) lagert und
diese Kette (154) in dieser Kettenkammer (210) kontaktiert;
diese Kurbelwelle (84) umfasst:
eine Lagerwelle (240) eingesetzt in ein Lagerloch (238), ausgebildet in diesem Spannungs-Bereitstellungselement (158), um dieses Spannungs-Bereitstellungselement (158) in einer schwenkbaren Weise zu lagern,
**gekennzeichnet durch** eine Behelfs-Lagerwelle (252), positioniert an einer gegenüberliegenden Seite zu diesem zweiten Kettenrad (146) mit Bezug auf eine gerade Linie (L1), welche eine Mitte (C1) von dieser Lagerwelle (240) und eine Mitte (C2) von diesem ersten Kettenrad (108) verbindet, wenn in eine axiale Richtung von dieser Kurbelwelle (56) betrachtet und berührt ein Behelfs-Lagerteil (251, 255),
ausgebildet an diesem Spannungs-Bereitstellungselement (158), um diesen Spannungs-Bereitstellungselement (158) zu lagern,
diese Kettenkammer (210) umfasst:
eine Lagerfläche (219), die einen Teil (228) von diesem Spannungs-Bereitstellungselement (158) berührt, um diesen einen Teil (218) in gleitender Weise zu lagern, während dieses Spannungs-Bereitstellungselement (158) **durch** diese Lagerwelle (240) gelagert ist;
eine Behelfs-Lagerfläche (213), die diesen einen Teil (228) des Spannungs-Bereitstellungselements (158) berührt, um diesen einen Teil (228) in gleitender Weise zu lagern, während dieses Spannungs-Bereitstellungselement (158) **durch** diese Behelfs-Lagerwelle (252) gelagert ist,
diese Behelfs-Lagerwelle (252) ist mehr zu der Seite von dieser Behelfs-Lagerflächen-Seite positioniert als ein Teil von dieser Kette (154), gewickelt um dieses erste Kettenrad (108), wenn in der axialen Richtung von dieser Kurbelwelle (56) betrachtet.

2. Der Motor (44) gemäß Anspruch 1, wobei während dieser Zylinderkörper (126) an diesem Kurbelgehäuse (84) angebracht ist, dieser Zylinderkopf (128) nicht an diesem Zylinderkörper (126) angebracht ist und dieses Spannungs-Bereitstellungselement (158) ist in diesen Rohrteil (194) von dieser Kurbelgehäuse-Seite eingesetzt, dieser eine Teil (228) von diesem Spannungs-Bereitstellungselement (158) kontaktiert diese Behelfs-Lagerfläche (213) und nimmt eine Reaktionskraft, gerichtet von dieser Behelfs-Lagerfläche (213) zu diesem Spannungs-Bereitstellungselement (158) von dieser Behelfs-Lagerfläche (213), auf,
dieser Behelfs-Lagerteil (251; 255) berührt diese Behelfs-Lagerwelle (252) und nimmt eine Reaktionskraft gerichtet von dieser Behelfs-Lagerwelle (252) zu diesem Spannungs-Bereitstellungselement (158) von dieser Behelfs-Lagerwelle (252) auf, und ein Teil in diesem Spannungs-Bereitstellungselement (158), positioniert zwischen diesen einem Teil (228) und diesem Behelfs-Lagerteil (251, 255) berührt den Teil von dieser Kette (154), gewickelt um dieses erste Kettenrad (108) und nimmt eine Reaktionskraft gerichtet von diesem ersten Kettenrad (108) zu diesem Spannungs-Bereitstellungselement (158) von dem Teil von dieser Kette (154), gewickelt um dieses erste Kettenrad (108), auf.

3. Der Motor (144) gemäß Anspruch 1 oder 2, wobei während dieser Zylinderkörper (126) an diesem Kurbelgehäuse (84) angebracht ist, dieser Zylinderkopf (128) ist an diesem Zylinderkörper (126) angebracht und dieses Spannungs-Bereitstellungselement (158) ist in diesen Rohrteil (194) und diesen Zylinderkopf (128) von dieser Kurbelgehäuse-Seite eingesetzt,
diese Lagerwelle (240) ist in dieses Lagerloch (238) eingesetzt, so dass dieses Spannungs-Bereitstellungselement (158) schwenkbar um diese Lagerwelle (240) gelagert ist,
dieser eine Teile (228) von diesem Spannungs-Bereitstellungselement (158) berührt diese Lagerfläche (219) und nimmt eine Reaktionskraft, gerichtet von dieser Lagerfläche (219) zu diesem Spannungs-Bereitstellungselement (158) von dieser Lagerfläche (219) auf, und
ein Teil in diesem Spannungs-Bereitstellungselement (158), positioniert zwischen diesen einem Teil (128) und diesem Lagerloch (238) berührt diese Kette (154), gewickelt um dieses erste und zweite Kettenrad (108, 146) und nimmt eine Reaktionskraft, gerichtet von dieser Kette (154) zu diesem Spannungs-Bereitstellungselement (158) von dieser Kette (154) auf.

4. Der Motor (44) gemäß irgendeinem der Ansprüche 1 bis 3, wobei diese Lagerwelle (240) weiter als diese Behelfs-Lagerwelle (242) positioniert ist, mit Bezug auf eine gerade Linie (L2), welche eine Mitte (C2) des ersten Kettenrads (108) und eine Mitte (C3) des zweiten Kettenrads (146) verbindet, wenn in die axiale Richtung der Kurbelwelle (56) betrachtet.

5. Der Motor (44) gemäß irgendeinem der Ansprüche 1 bis 4, wobei während Spannungs-Bereitstellungselement (158) durch diese Behelfs-Lagerfläche (213), den Teil von dieser Kette (154), gewickelt um dieses erste Kettenrad (108) und diese Behelfs-Lagerwelle (152) gelagert ist, diese Lagerwelle (240) und dieses Lagerloch (238) miteinander in einer Richtung parallel zu dieser Lagerfläche (219) oder dieser Behelfs-Lagerfläche (213) überlappen .

6. Der Motor (44) gemäß irgendeinem der Ansprüche 1 bis 5, wobei diese Lagerwelle (240) entfernbar von dem Kurbelgehäuse (84) ist.

7. Der Motor (44) gemäß irgendeinem der Ansprüche 1 bis 6, wobei dieser Behelfs-Lagerteil (251; 255) an diesem Kontaktelement (168) ausgebildet ist.

8. Der Motor (44) gemäß irgendeinem der Ansprüche 1 bis 7, wobei dieser Behelfs-Lagerteil (251; 255) mehr an der Seite von diesem einen Teil (228) von diesem Spannungs-Bereitstellungselement (158) als zu diesem Lagerloch (238) positioniert ist.

9. Der Motor (44) gemäß irgendeinem der Ansprüche 1 bis 8, wobei dieses Spannungs-Bereitstellungselement (158) ein Einsetzloch (250) umfasst, in das diese Behelfs-Lagerwelle (252) eingesetzt ist und eine innere Umfangsfläche (251) von diesem Einsetzloch (250) ist dieser Behelfs-Lagerteil (251).

10. Der Motor (44) gemäß Anspruch 9, wobei während diese Behelfs-Lagerwelle (252) in dieses Einsetzloch (250) eingesetzt ist, ist ein Spitzenende von dieser Behelfs-Lagerwelle (252) innerhalb dieses Einsetzlochs (250) positioniert.

11. Der Motor (44) gemäß irgendeinem der Ansprüche 1 bis 8, wobei dieser Behelfs-Lagerteil (255) eine Nut (254) beinhaltet, in welche diese Behelfs-Lagerwelle (252) eintritt und eine innere Fläche (255) von dieser Nut (254) ist dieser Behelfs-Lagerteil (255).

12. Der Motor (44) gemäß irgendeinem der Ansprüche 1 bis 11, wobei diese Behelfs-Lagerwelle (252) integral mit diesem Kurbelgehäuse (84) ausgebildet ist.

13. Der Motor (44) gemäß irgendeinem der Ansprüche 1 bis 11, wobei diese Behelfs-Lagerwelle (252) entfernbar von diesem Kurbelgehäuse (84) ist.

14. Ein Sattel-Reit-Typ-Fahrzeug mit einem Motor (44) gemäß irgendeinem der Ansprüche 1 bis 13.

15. Ein Verfahren zum Zusammenbau eines Motors (44) mit den Schritten:
Herstellen eines Kurbelgehäuses (84), das eine Kurbelwelle (56) hat, einen ersten Raum (110), der ein erstes Kettenrad (108) angebracht an dieser Kurbelwelle (56) und eine Behelfs-Lagerwelle (252), vorgesehen in diesem ersten Raum (110), aufnimmt;
Wickeln einer Kette (154) um dieses erste Kettenrad (108);
Anbringen eines Zylinderkörpers (126), der einen Rohrteil (194) hat, der einen zweiten Raum (138), verbunden mit dem ersten Raum (110), an diesem Kurbelgehäuse (84) bildet;
Einsetzen eines Spannungs-Bereitstellungselements (158), welches ein Platten-Federelements (166) und ein Kontaktelement (168) beinhaltet, welches dieses Platten-Federelement (166) in diesen Rohrteil (194) von dieser Kurbelgehäuse-Seite lagert und dieses Spannungs-Bereitstellungselement (158) durch eine Behelfs-Lagerfläche (213) behelfsmäßig fixiert, ausgebildet an diesem Rohrteil (194), ein Teil von dieser Kette (154) gewickelt um dieses erste Kettenrad (108) und diese Behelfs-Lagerwelle (252);
Anbringen eines Zylinderkopfs (128), der einen dritten Raum (148) hat, welcher ein zweites Kettenrad (146), angebracht an einer Nockenwelle (142), lagert und mit diesem zweiten Raum (138) verbunden ist an diesen Zylinderkörper (126), um dadurch eine Kettenkammer (210) zu bilden, welche diese ersten, zweiten und dritten Räume (110, 138, 148) beinhaltet;
Wickeln dieser Kette (154) um dieses zweite Kettenrad (146);
Lösen dieses Spannungs-Bereitstellungselements (158) von einem Behelfs-Fixierungs-Zustand, erreicht durch diese Behelfs-Lagerfläche (213), den Teil von dieser Kette (154), gewickelt um dieses erste Kettenrad (108), und diese Behelfs-Lagerwelle (252);
Einsetzen dieses Spannungs-Bereitstellungselements (158) weiter zu dieser Zylinderkopf-Seite von dessen Behelfs-Fixierungs-Zustand, erreicht durch dieses Behelfs-Lagerfläche (213), den Teil von dieser Kette (154), gewickelt um dieses erste Kettenrad (108), und dieses Behelfs-Lagerwelle (252) und mit einem von diesem Spannungs-Bereitstellungselement (158) kontaktiert eine Lagerfläche (219),
ausgebildet an diesem Zylinderkopf (128); und
Einsetzen der Lagerwelle (240), vorgesehen in diesem ersten Raum (110) von diesem Kurbelgehäuse (84), in ein Lagerloch (238), ausgebildet in diesem Spannungs-Bereitstellungselement (158) und Lagern dieses Spannungs-Bereitstellungselements (158) in einer schwenkbaren Weise um diese Lagerwelle (240), während dieser eine Teil (128) von diesem Spannungs-Bereitstellungselement (158) in Kontakt mit dieser Lagerfläche (219) ist.

## Revendications

1. Moteur (44) comportant une chambre à chaîne (210), comprenant :
- un vilebrequin (56) ;
- un arbre à cames (142) ;
- un premier pignon (108) fixé audit arbre de vilebrequin (56) ;
- un deuxième pignon (146) fixé audit arbre à cames (142) ;
- une enveloppe de vilebrequin (84) logeant ledit premier pignon (108) ;
- un corps de cylindre (126) fixé à ladite enveloppe de vilebrequin (84) ;
- une tête de cylindre (128) fixée audit corps de cylindre (126) pour loger ledit deuxième pignon (146) ;
- une chaîne (154) enroulée autour dudit premier et dudit deuxième pignon (108, 146) ; et
- un élément occasionnant une tension (158) occasionnant une tension à ladite chaîne (154),
- ladite enveloppe de vilebrequin (84), ledit corps de cylindre (126) et ladite tête de cylindre (128) formant ladite chambre à chaîne (210) logeant ladite chaîne (154) et ledit élément occasionnant une tension (158) ;
- ledit corps de cylindre (126) comprenant une partie tubulaire (194) formant une partie de ladite chambre à chaîne (210),
- ledit élément occasionnant une tension (158) comprenant :
- un élément de ressort plat (166) courbé en forme d'arche lorsqu'il est vu dans une direction axiale dudit arbre à cames (56) ; et
- un élément de contact (168) supportant ledit élément de ressort plat (166) et venant au contact de ladite chaîne (154) dans ladite chambre à chaîne (210) ; et
- ladite enveloppe de vilebrequin (84) comprenant :
- un arbre de support (240) inséré dans un trou de support (238) formé au niveau dudit élément occasionnant une tension (158) pour supporter ledit élément occasionnant une tension (158) d'une manière pivotable, ladite enveloppe de vilebrequin (84) comprenant :
- un arbre de support provisionnel (252) positionné sur un côté opposé audit deuxième pignon (146) par rapport à une ligne droite (L1) reliant un centre (C1) dudit arbre de support (240) et un centre (C2) dudit premier pignon (108) lorsqu'il est vu dans une direction axiale dudit arbre de vilebrequin (56) et venant au contact d'une partie de support provisionnelle (251 ; 255) formée au niveau dudit élément occasionnant une tension (158) pour supporter ledit élément occasionnant une tension (158), et ladite chambre à chaîne (210) comprenant :
- ladite chambre à chaîne (210) comprenant :
- une surface de support (219) venant au contact d'une partie (228) dudit élément occasionnant une tension (158) pour supporter ladite une partie (228) de manière glissante tandis que ledit élément occasionnant une tension (158) est supporté par ledit arbre de support (240),
- **caractérisé par** ladite enveloppe de vilebrequin (84) comprenant :
- un arbre de support provisionnel (252) positionné sur un côté opposé audit deuxième pignon (146) par rapport à une ligne droite (L1) reliant un centre (C1) dudit arbre de support (240) et un centre (C2) dudit premier pignon (108) lorsqu'il est vu dans une direction axiale dudit arbre de vilebrequin (56) et venant au contact d'une partie de support provisionnelle (251 ; 255) formée au niveau dudit élément occasionnant une tension (158) pour supporter ledit élément occasionnant une tension (158), et ladite chambre à chaîne (210) comprenant :
- ladite chambre à chaîne (210) comprenant :
- une surface de support (219) venant au contact d'une partie (228) dudit élément occasionnant une tension (158) pour supporter ladite une partie (228) de manière glissante tandis que ledit élément occasionnant une tension (158) est supporté par ledit arbre de support (240),
- une surface de support provisionnelle (213) venant au contact de ladite une partie (228) dudit élément occasionnant une tension (158) pour supporter ladite une partie (228) de manière glissante tandis que ledit élément occasionnant une tension (158) est supporté par ledit arbre de support provisionnel (252),
- ledit arbre de support provisionnel (252) étant positionné davantage du côté dudit côté de ladite surface de support provisionnelle qu'une partie de ladite chaîne (154) enroulée autour dudit premier pignon (108) lorsqu'il est vu dans la direction axiale dudit arbre de vilebrequin (56).

2. Moteur (44) selon la revendication 1, dans lequel, tandis que ledit corps de cylindre (126) est fixé à ladite enveloppe de vilebrequin (84), ladite tête de cylindre (128) n'est pas fixée audit corps de cylindre (126) et ledit élément occasionnant une tension (158) est inséré dans ladite partie tubulaire (194) depuis le côté de ladite enveloppe de vilebrequin,
- ladite une partie (228) dudit élément occasionnant une tension (158) vient au contact de ladite surface de support provisionnelle (213) et reçoit une force de réaction dirigée de ladite surface de support provisionnelle (213) audit élément occasionnant une tension (158) à partir de ladite surface de support provisionnelle (213) ;
- ladite partie de support provisionnelle (251 ; 255) vient au contact dudit arbre de support provisionnel (252) et reçoit une force de réaction dirigée dudit arbre de support provisionnel (252) audit élément occasionnant une tension (158) à partir dudit arbre de support provisionnel (252) ; et
- une partie dudit élément occasionnant une tension (158) positionnée entre ladite une partie (228) et ladite partie de support provisionnelle (251 ; 255) vient au contact de la partie de ladite chaîne (154) enroulée autour dudit premier pignon (108) et reçoit une force de réaction dirigée dudit premier pignon (108) audit élément occasionnant une tension (158) à partir de la partie de ladite chaîne (154) enroulée autour dudit premier pignon (108).

3. Moteur (44) selon les revendications 1 ou 2, dans lequel, tandis que ledit corps de cylindre (126) est fixé à ladite enveloppe de vilebrequin (84), ladite tête de cylindre (128) est fixée audit corps de cylindre (126) et ledit élément occasionnant une tension (158) est inséré dans ladite partie tubulaire (194) et ladite tête de cylindre (128) depuis le côté de ladite enveloppe de vilebrequin,
- ledit arbre de support (240) est inséré dans ledit trou de support (238), de sorte que ledit élément occasionnant une tension (158) soit supporté de façon pivotable autour dudit arbre de support (240) ;
- ladite une partie (228) dudit élément occasionnant une tension (158) vient au contact de ladite surface de support (219) et reçoit une force de réaction dirigée de ladite surface de support (219) audit élément occasionnant une tension (158) à partir de ladite surface de support (219) ; et
- une partie dudit élément occasionnant une tension (158) positionnée entre ladite une partie (228) et ledit trou de support (238) vient au contact de ladite chaîne (154) enroulée autour desdits premier et deuxième pignons (108, 146) et reçoit une force de réaction dirigée de ladite chaîne (154) audit élément occasionnant une tension (158) à partir de ladite chaîne (154).

4. Moteur (44) selon l'une quelconque des revendications 1 à 3, dans lequel arbre de support (240) est positionné plus avant que ledit arbre de support provisionnel (252) par rapport à une ligne droite (L2) reliant un centre (C2) dudit premier pignon (108) et un centre (C3) dudit deuxième pignon (146) lorsqu'il est vu dans la direction axiale dudit arbre de vilebrequin (56).

5. Moteur (44) selon l'une quelconque des revendications 1 à 4, dans lequel, tandis que ledit élément occasionnant une tension (158) est supporté par ladite surface de support provisionnelle (213), la partie de ladite chaîne (154) enroulée autour dudit premier pignon (108) et ledit arbre de support provisionnel (252), ledit arbre de support (240) et ledit trou de support (238) se recouvrent l'un l'autre à partir dans une direction parallèle à ladite surface de support (219) ou ladite surface de support provisionnelle (213).

6. Moteur (44) selon l'une quelconque des revendications 1 à 5, dans lequel ledit arbre de support (240) est amovible à partir de ladite enveloppe de vilebrequin (84).

7. Moteur (44) selon l'une quelconque des revendications 1 à 6, dans lequel ladite partie de support provisionnelle (251 ; 255) est formée au niveau dudit élément de contact (168).

8. Moteur (44) selon l'une quelconque des revendications 1 à 7, dans lequel ladite partie de support provisionnelle (251 ; 255) est positionnée davantage du côté de ladite une partie (228) dudit élément occasionnant une tension (158) que ledit trou de support (238).

9. Moteur (44) selon l'une quelconque des revendications 1 à 8, dans lequel ledit élément occasionnant une tension (158) comprend un trou d'insertion (250) dans lequel ledit arbre de support provisionnel (252) est inséré et une surface circonférentielle intérieure (251) dudit trou d'insertion (250) est ladite partie de support provisionnelle (251).

10. Moteur (44) selon la revendication 9, dans lequel, tandis que ledit arbre de support provisionnel (252) est inséré dans ledit trou d'insertion (250), une extrémité de pointe dudit arbre de support provisionnel (252) est positionnée dans ledit trou d'insertion (250).

11. Moteur (44) selon l'une quelconque des revendications 1 à 8, dans lequel ladite partie de support provisionnelle (255) inclut une encoche (254) dans laquelle entre ledit arbre de support provisionnel (252) et une surface intérieure (255) de ladite encoche (254) est ladite partie de support provisionnelle (255).

12. Moteur (44) selon l'une quelconque des revendications 1 à 11, dans lequel ledit arbre de support provisionnel (252) est formé intégralement avec ladite enveloppe de vilebrequin (84).

13. Moteur (44) selon l'une quelconque des revendications 1 à 11, dans lequel ledit arbre de support provisionnel (252) est amovible à partir de ladite enveloppe de vilebrequin (84).

14. véhicule de type monté à califourchon comprenant un moteur (44) selon l'une quelconque des revendications 1 à 13.

15. Procédé d'assemblage d'un moteur (44) comprenant les étapes consistant à :
- préparer une enveloppe de vilebrequin (84) comportant un vilebrequin (56), un premier espace (110) logeant un premier pignon (108) fixé audit vilebrequin (56) et un arbre de support provisionnel (252) disposé dans ledit premier espace (110) ;
- enrouler une chaîne (154) autour dudit premier pignon (108) ;
- fixer un corps de cylindre (126) comprenant une partie tubulaire (194) formant une second espace (138) relié audit premier espace (110) à ladite enveloppe de vilebrequin (84) ;
- insérer un élément occasionnant une tension (158) incluant un élément de ressort plat (166) et un élément de contact (168) supportant ledit élément de ressort plat (166) dans ladite partie tubulaire (194) à partir du côté de ladite enveloppe de vilebrequin et fixer de façon provisionnelle ledit élément occasionnant une tension (158) par une surface de support provisionnelle (213) formée au niveau de ladite partie tubulaire (194), d'une partie de ladite chaîne (154) enroulée autour dudit premier pignon (108) et dudit arbre de support provisionnel (252) ;
- fixer une tête de cylindre (128) comportant un troisième espace (148) logeant un deuxième pignon (146) fixé à un arbre à cames (142) et relié audit second espace (138) à ladite tête de cylindre (128), formant ainsi une chambre à chaîne (210) comportant lesdits premier, deuxième et troisième espaces (110, 138, 148) ;
- enrouler ladite chaîne (154) autour dudit deuxième pignon (146) ;
- libérer ledit élément occasionnant une tension (158) d'un état de fixation provisionnelle obtenu par ladite surface de support provisionnelle (213), la partie de ladite chaîne (154) enroulée autour dudit premier pignon (108) et ledit arbre de support provisionnel (252) ;
- insérer ledit élément occasionnant une tension (158) davantage du côté de ladite tête de cylindre à partir de son état de fixation provisionnelle obtenu par ladite surface de support provisionnelle (213), la partie de ladite chaîne (154) enroulée autour dudit premier pignon (108) et ledit arbre de support provisionnel (252) et faire en sorte qu'un desdits éléments occasionnant une tension (158) vienne au contact d'un surface de support (219) formée au niveau de ladite tête de cylindre (128) ; et
- insérer l'arbre de support (240) disposé dans ledit premier espace (110) de ladite enveloppe de vilebrequin (84) dans un trou de support (238) ménagé au niveau dudit élément occasionnant une tension (158) et supportant ledit élément occasionnant une tension (158) d'un façon pivotable autour dudit arbre de support (240) tandis que ladite une partie (228) dudit élément occasionnant une tension (158) est en contact avec ladite surface de support (219).
